# DEMANDE DE BREVET EUROPEEN

(11) **EP 1 100 048 A1**
(43) Date de publication de la demande: **16.05.2001**
(21) Numéro de dépôt: 00390021.4
(22) Date de dépôt: 09.11.2000
(51) Int. Cl.: G06T 7/00

(54) **Procédé de création automatique de maquette numérique à partir de couples d'images stéréoscopiques**

(30) Priorité: 12.11.1999 FR 9914237
(71) Demandeur: Société N3DI S.A.R.L., 09140 Erce (FR)
(72) Inventeur: Aube, Bertrand, 31000 Toulouse (FR); Orteu, Jean José, 81013 Albi Cedex 09 (FR); Garcia, Dorian, 81013 Albi Cedex 09 (FR)
(74) Mandataire: Ravina, Bernard

(57) **Abrégé**

La présente invention est du domaine du traitement de l'image numérique et concerne un procédé permettant de reconstituer une maquette numérique à partir de deux vues en deux dimensions prises selon des points de vue différents, également appelées couple d'images stéréoscopiques.

L'invention est particulièrement bien adaptée à la numérisation en trois dimensions d'objets de grand volume tels que des bâtiments ou des sites naturels par exemple.

Le procédé consiste à :
- calibrer automatiquement le capteur c'est à dire déterminer les paramètres intrinsèques dudit capteur (longueur focale, centre optique et les coefficients de distorsion de son objectif), cette étape étant nécessaire pour chaque configuration du capteur (longueur focale et mise au point) susceptible d'être utilisée
- saisir à l'aide du capteur au moins un couple d'image de la scène à modéliser,
- prendre en compte les coefficients de distorsion de l'objectif dudit capteur pour les étapes suivantes du traitement des images,
- déterminer la géométrie épipôlaire du couple d'image à partir de couples de points corrélés entre les deux images,
- calculer le mouvement (position et l'orientation) d'une vue par rapport à l'autre du couple d'images à partir des paramètres intrinsèques du capteur et de la géométrie épipôlaire,
- recouvrer la maquette numérique Euclidienne de la scène par rectification puis corrélation automatique du couple d'image si besoin et conversion en géométrie Euclidienne en exploitant la géométrie épipolaire et les paramètres intrinsèques calculés,
- mailler par triangulation le nuage de points et texturer la surface à l'aide des prises de vues initiales pour le rendu réaliste de la maquette.

## Description

La présente invention est du domaine du traitement de l'image numérique et concerne un procédé permettant de reconstituer une maquette numérique à partir de deux vues en deux dimensions prises selon des points de vue différents, également appelées couple d'images stéréoscopiques.
L'invention est particulièrement bien adaptée à la numérisation en trois dimensions d'objets de grand volume tels que des bâtiments ou des sites naturels par exemple.

Il est déjà connu certains systèmes de numérisation comme par exemple le capteur « SOISIC, marque déposée » associé au logiciel « 3DIPSOS, marque déposée » développé par la société EDF. Le capteur « SOISIC, marque déposée » se compose d'un générateur de faisceau laser réfléchi par un miroir mobile (permettant le balayage du faisceau) et d'une caméra CCD chargée de saisir l'image du spot laser sur l'objet, et rigidement lié au générateur de faisceau laser.
Grâce à un algorithme de triangulation, une centaine de points en trois dimensions sont saisis par seconde à une distance de 1 à 30m de l'objet ou de la scène à saisir. Le logiciel « 3DIPSOS marque déposée » va assembler dans un référentiel unique les différents nuages de points récoltés puis, à l'aide d'un opérateur, va convertir ces points en entités géométriques maillées (cylindre, plan, facettes...) pour obtenir un fichier de type CAO utilisable par des logiciels de cette catégorie, ainsi qu'en réalité virtuelle.
Ce système présente des limites dans la mesure où la distance maximum de saisie de points pour le plus gros capteur est de trente mètres. Pour saisir par exemple un complexe industriel dans son ensemble il faudrait saisir un trop grand nombre de nuages de points. D'autre part, ce type de système est lent dans la mesure où un nuage de points doit en contenir un grand nombre pour pouvoir prendre en compte les détails du modèle à numériser. Typiquement, il est nécessaire de capturer plusieurs centaines de milliers de points ce qui représente plusieurs dizaines de minutes de saisie sans qu'il puisse y avoir de modifications (mouvement) du modèle à saisir.

D'autres systèmes sont connus comme ceux permettant les relevés cartographiques aériens (avions ou satellites) : Deux appareils de prises de vues, dont les positions et directions de visée de l'un par rapport à l'autre sont connues, saisissent des images (films) du sol, ces images seront ensuite corrélées par un opérateur, pour obtenir une altitude par triangulation (courbe de niveau).

Plus traditionnellement il est également connu la saisie par théodolite d'un terrain, par calcul de distances et d'angles relatifs entre des points précis de celui-ci.

D'une manière générale, le principal inconvénient des systèmes connus réside dans le fait qu'il est nécessaire, soit de connaître avec précision soit la position et l'orientation des capteurs lors de la prise de vue, soit de posséder une information géométrique a priori de données de la scène à traiter (positions de points, distances, lignes parallèles ou orthogonales).

La présente invention a pour objectif de résoudre les problèmes des dispositifs connus en proposant un nouveau procédé calculant automatiquement la représentation en trois dimensions d'une scène à partir de deux prises de vues de celle-ci, sans connaissance particulière ni du capteur, ni de la scène. Ce procédé peut être mis en oeuvre très simplement à l'aide d'un micro-ordinateur classique et d'un appareil photographique numérique par exemple, ce qui simplifie considérablement la saisie par rapport aux systèmes actuels.

Pour parvenir à ce résultat le procédé selon l'invention est caractérisé en ce qu'il consiste à :
- calibrer automatiquement le capteur c'est à dire déterminer les paramètres intrinsèques dudit capteur (longueur focale, centre optique et les coefficients de distorsion de son objectif), cette étape étant nécessaire pour chaque longueur focale susceptible d'être utilisée ;
- saisir à l'aide du capteur au moins un couple d'image de la scène à modéliser ;
- prendre en compte les coefficients de distorsion de l'objectif dudit capteur pour les étapes suivantes du traitement des images ;
- déterminer la géométrie épipôlaire du couple d'images à partir de couples de points corrélés entre les deux images ;
- calculer le mouvement (position et l'orientation) d'une vue par rapport à l'autre, à partir des paramètres intrinsèques du capteur et de la géométrie épipôlaire;
- recouvrer la maquette numérique Euclidienne de la scène par rectification puis corrélation automatique du couple d'images si besoin et conversion en géométrie Euclidienne par triangulation en utilisant le mouvement entre les deux vues ;
- mailler le nuage de point et texturer la surface à l'aide du couple de vues initiale pour le rendu réaliste de la maquette.

D'autres avantages et caractéristiques de l'invention apparaîtront à la lecture de la description ci-après, de formes de réalisation données à titre d'exemple, non limitatifs et illustrés par les dessins joints dans lesquels :

La figure 1 représente les différentes étapes du procédé selon l'invention.

La figure 2 schématise la méthode de rectification d'une image.

Le procédé selon la présente invention permet de créer automatiquement une maquette numérique en géométrie Euclidienne d'une scène quelconque uniquement à partir d'un couple d'images stéréoscopiques fourni par un capteur. Ce capteur étant tout appareil permettant de générer une information numérique à partir d'une visée optique, tel que par exemple un appareil photographique ou un caméscope numérique.

Le procédé fonctionne sans connaissance a priori ni des deux points de vue des prises de vues, ni de données géométriques de la scène à traiter.

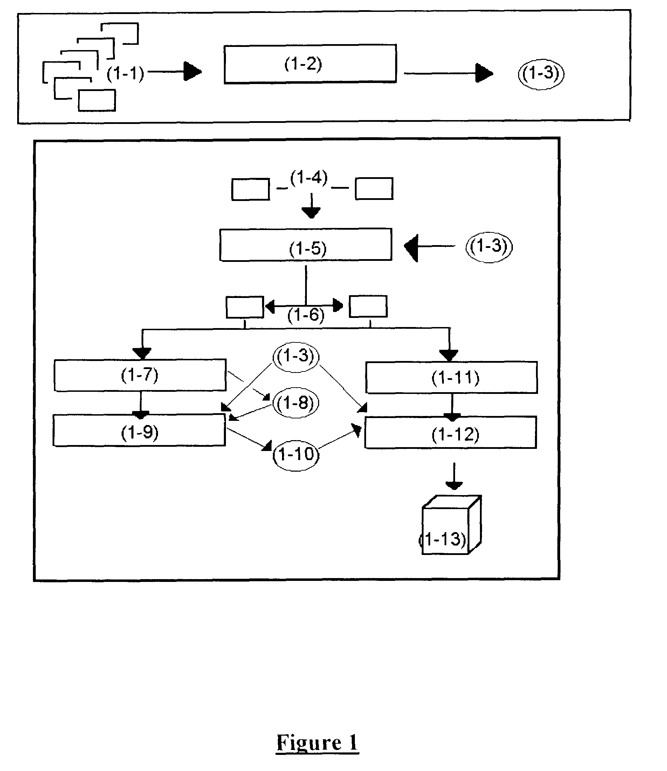

Le procédé s'effectue selon plusieurs étapes représentées sur la figure 1.

Une première étape consiste à la calibration (1-2) automatique du capteur. Cette étape permet d'évaluer les paramètres intrinsèques du capteur (longueur focale, centre optique et les coefficients de distorsion de son objectif) (1-3) grâce à une série de prises de vue d'une mire (1-1). Cette évaluation initiale permet de considérer le capteur comme calibré pour de futures séries de prises de vue.

Au moins un couple d'images stéréoscopiques (1-4) des scènes à modéliser est pris à l'aide du capteur. L'écart de direction de visée entre les deux vues stéréoscopiques doit être suffisamment important pour pouvoir y déceler des différences (précision des résultats), et suffisamment faible pour que ces images soient semblables (automatisme des algorithmes de corrélation, perte des informations non communes aux deux vues). Il n'y a donc pas d'écarts optimums, tout dépend de l'application et de ce que l'on souhaite privilégier, la précision ou l'automatisation. Les écarts de visée peuvent donc varier de 3° à 45° environ.

Ces deux images stéréoscopiques (1-4) sont corrigées des distorsions de l'objectif (1-5), le résultat (1-6) est analysé pour parvenir au modèle numérique en trois dimensions. Dans un premier temps, il y a mise en correspondance par la détermination de la géométrie épipolaire (1-7) entre ces deux vues à partir de couples de points corrélés entre les deux images. Cette géométrie épipolaire se concrétise par la matrice fondamentale (1-8). Grâce aux paramètres intrinsèques du capteur évalués à la première étape (1-3), il est possible de calculer alors la matrice essentielle (1-9) et donc le mouvement d'une prise de vue par rapport à l'autre (1-10).

L'étape suivante consiste à recouvrer la géométrie Euclidienne de la scène : Grâce à la connaissance de la géométrie épipolaire, il est possible si besoin, de rectifier puis corréler les deux images (1-11). Cette étape ajoute à celle déjà calculée une série de couples de points entre les deux vues représentant un même point dans l'espace. Chacun de ces couples de point corrélés, grâce à la connaissance du mouvement d'une prise de vue par rapport à l'autre, permet d'obtenir un point dans l'espace en géométrie Euclidienne à un facteur d'échelle près (1-12). Ces points vont être maillés (reliés entres eux pour former une surface composée d'un ensemble de triangles jointifs), puis une texture graphique générée à partir du couple de vues va être «collé» sur la surface maillée pour un rendu réaliste de la maquette (1-13).

Les termes tels que géométrie épipolaire, matrice fondamentale, matrice essentielle, images rectifiées, corrélation, font appel au vocabulaire de la vision robotique et font partie des connaissances de l'homme de l'art. Toutefois, ces termes seront brièvement définis dans la description ci-après du détail des différentes étapes représentées sur la figurel.

La première étape du procédé consiste donc à calibrer automatiquement le capteur. Cette opération doit s'effectuer pour chaque longueur focale susceptible d'être utilisée. Le calibrage du capteur consiste à saisir l'image d'une mire spécifique (croix, cercles, etc.) selon plusieurs points de vues (préférablement de 5 à 7) à l'aide du capteur pour une caractéristique de longueur focale et de mise au point donnée. Les images sont alors analysées, c'est à dire que l'on va détecter sur ces images avec une résolution subpixel, les positions des éléments de la mire sur les différentes vues.

Connaissant les positions de ces éléments dans un repère local lié à la mire, on se retrouve avec un système d'équations surdéterminé (plus d'équations que d'inconnues) qui relie les points en trois dimensions des éléments de la mire aux points en deux dimensions de ces éléments obtenus via le capteur. La relation entre les points en trois dimensions (réels) et les points en deux dimensions (images) se décompose en paramètres de deux catégories :
- les paramètres intrinsèques du capteur (longueur focale, centre optique et les coefficients de distorsion de l'objectif)
- les paramètres extrinsèques (position et orientation de la mire par rapport au capteur) qui identifient chaque vue.
Ce sont les paramètres intrinsèques du capteur que l'on cherche ici à évaluer dans cette première étape.
Une première estimation de ces paramètres utilise les algorithmes de Ravn, Andersen & Sorensen (Titre de l'ouvrage original : « Auto-calibration in Automation Systems using Vision » pouvant être traduit par « Autocalibration par la vision de systèmes automatisés ») connus de l'homme de l'art.
Ces paramètres servent à initialiser un processus d'optimisation global donnant une solution optimale à la fois des paramètres intrinsèques du capteur mais aussi des points 3D de la mire, celle-ci ne servant qu'à initialiser le processus, n'a pas de précision particulière requise.

Les étapes suivantes (détermination de la géométrie épipolaire, rectification, corrélation & reconstruction Euclidienne) concernent le traitement des couples de vues prises par le capteur calibré, après correction de la distorsion de l'objectif.

La géométrie épipolaire est la géométrie qui caractérise deux vues stéréoscopiques. Plus précisément, soit un couple d'images (image 1, image 2), un point dans l'espace se projette en un point à 2 dimensions dans chacune des vues. Tout point de l'image 1 a son équivalent dans l'image 2 sur une droite (droite épipolaire), et l'ensemble de ces droites se croisent en un point appelé épipôle de l'image 1 dans l'image 2. Inversement, il existe dans l'image 1 une épipôle des droites épipolaires de l'image 1 par rapport aux points de l'image 2. C'est la matrice fondamentale qui exprime toutes ces informations, elle permet de calculer les deux épipôles, et pour un point d'une des deux images, l'équation de sa droite épipolaire dans l'autre image.

La détermination de la géométrie épipolaire des deux vues peut se faire soit entièrement automatiquement, soit semi-automatiquement, soit manuellement. Les méthodes semi-automatiques et manuelles ne sont utilisées que lorsque la méthode automatique ne parvient pas à un résultat satisfaisant, du fait de la mauvaise qualité des vues ou de leurs caractéristiques particulières. Dans ce cas, il s'agit simplement pour l'utilisateur d'indiquer au moins une vingtaine de couples de points représentant chacun un point dans l'espacé en les sélectionnant sur l'image avec la souris de son micro-ordinateur.

La méthode automatique permettant d'éviter cette manipulation à l'utilisateur se présente de la manière suivante: Cette méthode s'inspire de celle de Z. ZHANG (Titre de l'ouvrage original : « A Robust Technique for Matching Two Uncalibrated Images Through the Recovery of the Unknown Epipolar Geometry » pouvant être traduit par « Une technique robuste pour déterminer le mouvement entre deux images non calibrées à partir de l'estimation de la géométrie épipolaire ») également connue de l'homme de l'art. La première des deux vues est analysée afin d'identifier un certain nombre de points remarquables par un algorithme de «détection de coins», qui permet de repérer dans une image des détails significatifs du fait de changements brusques d'intensité de couleur (bordure de toit, de mur, ligne de crête, contour d'objet, fenêtre sur une façade ...).

Pour chacun de ces points remarquables, le meilleur candidat parmi un certain nombre est sélectionné dans la seconde vue, d'après un indice de corrélation prenant en compte les similitudes d'intensité lumineuse au voisinage de ces candidats avec le point remarquable de la première vue. Un seuil limite de corrélation permet de ne tenir compte que des couples les plus probables.

Un filtre supplémentaire intervient à ce stade: la méthode robuste d'estimation de la matrice fondamentale. Cette méthode permet de choisir les 8 couples de points nécessaires au calcul de la matrice fondamentale qui donnent le meilleur résultat sur la centaine de couples précédemment sélectionnés. Pour cela, en prenant soin de faire une sélection homogène sur l'ensemble de la surface des deux images, itérativement, on sélectionne 8 couples de points au hasard et on calcule la matrice fondamentale par la méthode de calcul directe de R. I. HARTLEY (Titre original de l'ouvrage "In defense of the 8 points algorithm" pouvant être traduit par "En défense de l'algorithme de 8 points"). A l'aide de cette matrice, on calcule la distance de la centaine de points sélectionnés à leurs droites épipôlaires, dans les deux sens, c'est à dire des points de l'image 1 vers leurs droites de l'image 2, et des points de l'image 2 vers leurs droites de l'image 1. La somme du carré de ces distances donne un indice de qualité de cette matrice : plus ce nombre est important, moins la matrice associée est de bonne qualité. On garde la matrice fondamentale ayant le meilleur indice de qualité et on sélectionne les couples de points ayant les distances les plus faibles par rapport à leurs droites épipolaires.

La méthode manuelle permettant d'indiquer soi-même les couples de points vient rejoindre ici le processus automatique.

La méthode semi-automatique intervient lorsqu'un nombre insuffisant de couples de points de bonne qualité a été détecté, l'utilisateur doit alors «compléter» la série.

Ces couples de points, une vingtaine, vont être utilisés comme un modèle surdéterminé à résoudre par une fonction non-linéaire (comme pour la première phase) dont les coefficients à ajuster sont les 9 éléments de la matrice fondamentale définitive.

Enfin, dans la mesure où les paramètres intrinsèques du capteur sont connus, il est alors possible de calculer la matrice essentielle de cette géométrie épipolaire, et grâce à cette matrice essentielle on peut déterminer la position et l'orientation respectives d'une vue par rapport à l'autre.

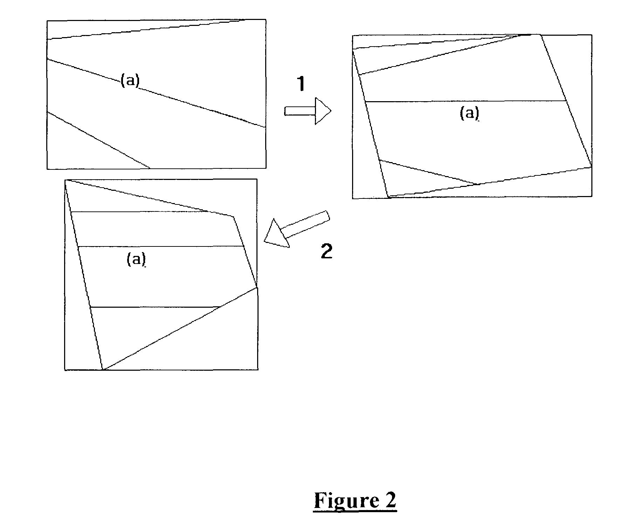

Dans le cas où le nombre de corrélation entre les deux images est insuffisant, une phase de corrélation automatique intervient alors, les images sont rectifiées selon le principe représenté sur la figure 2:
Soit une des deux vues (a), connaissant la géométrie épipolaire entre les deux vues, et donc les positions respectives des deux épipôles, il est possible de ramener l'épipôle sur l'axe horizontal par une rotation de l'ensemble de l'image par rapport à son centre (1), puis de projeter l'épipôle à l'infini (2), ce qui revient à rendre l'ensemble des droites épipolaires parallèles et horizontales. On obtient ainsi une rectification des images de telle sorte que chaque couple de points (1 dans chaque image) représentant un point dans l'espace se trouve sur une droite représentée par une ligne horizontale, ce qui facilite (et rend donc plus fiable) l'algorithme de corrélation qui va trouver les couples de points permettant de calculer les points à trois dimensions nécessaires à la représentation réaliste de la scène dans l'espace (maillage du nuage de points par triangulation et texturage de ces mailles à partir des prises de vues). Cette rectification fait appel essentiellement aux algorithmes de Richard I.Hartley (Titre original de l'ouvrage : « Theory and Practice of Projective Rectification » pouvant être traduit par « Théorie et pratique de la rectification projective ») connus de l'homme de l'art.

Le nombre de couples de points à déterminer dépend de l'usage souhaité du modèle numérique. Suivant celui-ci, on détermine un seuil de rupture d'intensité plus ou moins important entre pixels dans un algorithme de détection de bord.

Il existe plusieurs méthodes possibles, correspondant à plusieurs types d'algorithmes de corrélations qui donnent à partir de deux images rectifiées une série de couples de points corrélés, avec un niveau de fiabilité et un temps de calcul variable. Cette corrélation automatique, quelque soit le procédé utilisé, donne un résultat qu'il est nécessaire pour l'utilisateur de pouvoir vérifier et éventuellement «corriger» : pouvoir supprimer et/ou ajouter des couples de points à la main, de façon à pouvoir ajuster au mieux les points au maillage souhaité, et donc à la représentation finale du modèle dans l'espace.

Pour chacun des deux points du couple, l'écart de distance (appelé disparité) horizontale entre les deux images rectifiées va donner la position tridimensionnelle de ce point dans l'espace. Les informations de la première étape (paramètres intrinsèques du capteur) et de la seconde étape (mouvement relatif d'une prise de vue par rapport à l'autre) vont permettre de calculer les trois dimensions de ce point dans un espace Euclidien, et non plus simplement projectif.

Ce modèle Euclidien n'est pas métrique (les distances entre les points ne sont pas à l'échelle), mais il suffit pour l'utilisateur d'indiquer une distance entre deux points sur les deux images, pour que l'ensemble du modèle soit à l'échelle dans ses trois dimensions.

Un modèle en trois dimensions à partir de deux vues ne peut représenter que la partie commune à ces deux images. Pour obtenir un modèle complet (possibilité de le visualiser sous tous ses angles), il est nécessaire d'assembler plusieurs modèles, et donc d'effectuer plusieurs séries de prises de vues stéréoscopiques.

## Revendications

1. Procédé de création automatique de maquette numérique en géométrie Euclidienne à partir de couples d'images stéréoscopiques fournit par un capteur, caractérisé en ce qu'il consiste à :
- calibrer automatiquement le capteur c'est à dire déterminer les paramètres intrinsèques dudit capteur (longueur focale, centre optique et les coefficients de distorsion de son objectif), cette étape étant nécessaire pour chaque longueur focale susceptible d'être utilisée ;
- saisir à l'aide du capteur au moins un couple d'image de la scène à modéliser ;
- prendre en compte les coefficients de distorsion de l'objectif dudit capteur pour les étapes suivantes du traitement des images ;
- déterminer la géométrie épipôlaire du couple d'image à partir de couples de points corrélés entre les deux images ;
- calculer le mouvement (position et l'orientation) d'une vue par rapport à l'autre du couple d'images à partir des paramètres intrinsèques du capteur et de la géométrie épipôlaire ;
- recouvrer la maquette numérique Euclidienne de la scène par rectification puis corrélation automatique du couple d'image et conversion en géométrie Euclidienne en exploitant la géométrie épipolaire et les paramètres intrinsèques calculés
- mailler par triangulation le nuage de points et texturer la surface à l'aide du couple de vues initiale pour le rendu réaliste de la maquette.

2. Procédé selon la revendication 1 caractérisé en ce que la calibration automatique du capteur consiste à saisir l'image d'une mire spécifique selon plusieurs points de vue et d'analyser les images obtenues pour déterminer les paramètres intrinsèques y compris les coefficients de distorsion de l'objectif dudit capteur.

3. Procédé selon l'une des revendications précédentes caractérisé en ce que l'analyse des images de la mire permet une première estimation des paramètres intrinsèques utilisant les algorithmes de Ravn, Andersen & Sorensen (Titre de l'ouvrage original : « Auto-calibration in Automation Systems using Vision » pouvant être traduit par « Autocalibration par la vision de systèmes automatisés »), les paramètres ainsi estimés servant à initialiser un processus d'optimisation global donnant une solution optimale à la fois des paramètres intrinsèques du capteur mais aussi des points 3D de la mire, celle-ci ne servant qu'à initialiser le processus, n'a pas de précision particulière requise.

4. Procédé selon l'une des revendications précédentes caractérisé en ce que les paramètres de distorsions de l'objectif du capteur sont pris en compte pour corriger le couple d'images en préalable à leurs analyses.

5. Procédé selon l'une des revendications précédentes caractérisé en ce que la détermination de la géométrie épipolaire du couple d'images se fait à partir d'un échantillon de points corrélés qui peuvent être détectés soit automatiquement, soit semi-automatiquement, soit manuellement.

6. Procédé selon l'une des revendications précédentes caractérisé en ce que la méthode automatique de détermination de la géométrie épipolaire du couple d'image applique la méthode de Z. ZHANG (Titre de l'ouvrage original : « A Robust Technique for Matching Two Uncalibrated Images Through the Recovery of the Unknown Epipolar Geometry » pouvant être traduit par « Une technique robuste pour déterminer le mouvement entre deux images non calibrées à partir de l'estimation de la géométrie épipolaire »).

7. Procédé selon l'une des revendications précédentes caractérisé en ce que la méthode de calcul de la matrice fondamentale de R. I. HARTLEY (Titre original de l'ouvrage "In defense of the 8 points algorithm" pouvant être traduit par "En défense de l'algorithme de 8 points") est renforcée par l'utilisation des couples de points comme un modèle surdéterminé à résoudre par une fonction non linéaire dont les coefficients sont les composantes de la matrice fondamentale définitive.
